(19) Europäisches Patentamt
European Patent Office
Office européen des brevets

(11) Publication number : **0 622 431 A1**

# (12) EUROPEAN PATENT APPLICATION

(21) Application number : **94400930.7**

(51) Int. Cl.$^5$ : **C09J 7/02,** C09J 7/04

(22) Date of filing : **29.04.94**

(30) Priority : **30.04.93 US 56359**

(43) Date of publication of application :
**02.11.94 Bulletin 94/44**

(84) Designated Contracting States :
**DE FR GB IT**

(71) Applicant : **MINNESOTA MINING AND MANUFACTURING COMPANY**
**3M Center,**
**P.O. Box 33427**
**St. Paul, Minnesota 55133-3427 (US)**

(72) Inventor : **O'Leary, Timothy J., c/o Minnesota Mining and**
**Manufac. Comp.,**
**2501 Hudson Road,**
**P.O. Box 33427**
**Saint Paul, Minnesota 55133-3427 (US)**
Inventor : **Bayer, Glen H., Jr., c/o Minnesota Mining and**
**Manufac. Comp.,**
**2501 Hudson Road,**
**P.O. Box 33427**
**Saint Paul, Minnesota 55133-3427 (US)**

(74) Representative : **Warcoin, Jacques et al**
**Cabinet Régimbeau,**
**26, avenue Kléber**
**F-75116 Paris (FR)**

## (54) Article with striated coating layer.

(57) The present invention relates to an article including a substrate (14), such as paper, having a coating layer (10) on one major surface (12) thereof. The coating layer, which is preferably a pressure sensitive adhesive, includes an upper surface (16) including a plurality of aperiodic, irregular striae (18) formed therein to provide a reduced effective surface area of the coating layer.

EP 0 622 431 A1

## TECHNICAL FIELD

The invention relates to an article with a striated coating layer. More specifically, the invention relates to paper coated with a striated layer of pressure sensitive adhesive.

## BACKGROUND OF THE INVENTION

It is often desirable to coat a substrate with a coating material, such as an adhesive, in a desired location on the substrate. For example, pressure sensitive adhesive tape includes a web substrate coated with a layer of pressure sensitive adhesive. However, articles coated with pressure sensitive adhesive may not be susceptible of repositionable engagement with a surface. That is, the layer of adhesive contacts the entire surface of the object to which it is attached, and may be difficult to remove without damaging the article or the surface. In these and other cases, it may be desirable to provide an article including an adhesive layer that is adapted for repeated engagement and disengagement with a surface.

Such an article is disclosed in European Patent Publication No. 0,279,579, published 24 August 1988. Two embodiments of the article shown in the '579 publication are shown in cross section in Figures 1 and 2. Each article includes a substrate 2 overlain by a pressure sensitive adhesive layer 1 having a releasable polyester film layer 3 thereon. The surface of the article includes a plurality of parallel and periodic groove 4 and 4', respectively, and peak portions 5 and 5' adapted for contact with a surface. The adhesive sheet may be adhered to a surface (the "adherent") by removing the releasable polyester film layer 3 and touching the adhesive side of the sheet to the surface. Thus, "the boundary face between the adhesive sheet and an adherent approaches point-contact or line-contact..." along the peaks of the adhesive layer.

The title of the '579 publication is "Irregular Section Adhesive Sheets," and the term "irregular" is defined in the specification to mean that a cross sectional view would reveal "pressure-sensitive adhesive layer [that] is uneven or air passages are formed in the adhesion face." This definition is understood to mean that the top surface of the pressure sensitive adhesive layer is nonplanar, although it in fact is both regular and periodic.

The article disclosed in the '579 publication, although having a certain utility, may not be desirable for some applications. For example, it may be difficult to apply a relatively thin layer of coating material (known as a "low coating weight") to the substrate, because the article is typically made by molding a pre-applied uniform layer of coating material into the illustrated periodic groove and peak structure. Furthermore, the surface characteristics illustrated in Figures 1 and 2 may require a particular geometry to be effective. If the peaks are too close together, the surface of the coating layer may begin to function as if it were a uniform layer of coating material. Similarly, if the peaks are too far apart, the radius of curvature between adjacent peaks would be quite large, and the curved portions between adjacent peaks would again tend to function as if the coating material layer were uniform. These effects may not be desirable, because the adhesion characteristics of the article would be difficult to modify.

It is therefore desirable to provide an article having an adhesive layer suitable for repositionably applying the article to a surface while maintaining sufficient adhesive strength between the article and the surface.

## SUMMARY OF THE INVENTION

The present invention includes an article, comprising a substrate having a major surface, and a layer of coating material adjacent at least a portion of said major surface. The coating layer has an upper surface including a plurality of aperiodic, irregular striae formed therein to provide a reduced effective surface area of the coating layer. In other embodiments, the substrate is paper, and the coating material is a pressure sensitive adhesive.

Also provided is a pad of adhesively repositionable papers, the pad comprising a plurality of papers each having a major surface, and a layer of pressure sensitive adhesive adjacent at least a portion of said major surface. The adhesive layer has an upper surface including a plurality of aperiodic, irregular striae formed therein to provide a reduced effective surface area of the adhesive layer, to facilitate adhesive engagement with an opposed surface.

## BRIEF DESCRIPTION OF THE DRAWINGS

The present invention will be described with reference to the appended Figures, wherein like structure is represented by like numbers throughout the several views, and wherein:

Figure 1 is a cross-sectional perspective view of a sheet member according to the prior art;

Figure 2 is a cross-sectional perspective view of a sheet member according to the prior art;

Figure 3 is a perspective view of an article according to the present invention, including a striated coating layer disposed on a substrate;

Figure 4 is a picture of an article having a striated layer of coating material according to the present invention, under 7.5 power magnification to show detail;

Figure 5 is a second picture of an article having a striated layer of coating material according to the present invention, under 7.5 power magnification to show detail;

Figure 6 is a cross-sectional view of an apparatus for applying a coating material to a substrate to make the article of the present invention;

Figure 7 is a cross-sectional view of an applicator roller for applying a striated layer of coating material to a substrate to make the article of the present invention;

Figure 8 is a schematic representation of the process of applying a layer of coating material to a substrate, wherein the surface velocity of the application roller is approximately equal to the surface speed of the substrate;

Figure 9 is a schematic representation of the process of applying a layer of coating material to a substrate, wherein the surface velocity of the application roller is less than the surface speed of the substrate;

Figure 10 is a schematic representation of the process of applying a layer of coating material to a substrate, wherein the surface velocity of the application roller is greater than the surface speed of the substrate;

Figure 11 is a cross-sectional view of a pad of papers each comprising a striated layer of coating material bonded to the respective papers by a tie layer; and

Figure 12 is a cross-sectional view of a Z-folded pad of papers each comprising a striated layer of coating material bonded to the respective papers by a tie layer.

## DETAILED DESCRIPTION OF THE INVENTION

As shown in Figure 3, the present invention relates to an article having a coating layer 10 disposed on a major surface 12 of a substrate 14. The layer of coating material includes an upper surface 16 including a plurality of aperiodic, irregular striae 18 formed therein. As used herein, the term "irregular" means that the depth of the striae varies across the surface of the coating layer, and that the distance between striae varies across the surface of the coating layer. The striae reduce the available area for adhesion of the substrate 14 to a surface, which has certain benefits in the field of repositionable articles, because the article tends to remain tacky and adherent following repeated application to various surfaces. The various components of the article are described below, followed by a method of making such an article and a series of Examples.

### Substrates

The preferred substrate for use in making the article of the present invention is paper, such as 18-24 pound bond paper. Other suitable substrates may include plastic films, cellulose acetate, ethyl cellulose, woven or non-woven fabric formed of synthetic or natural materials, metal, metallized polymeric film, ceramic sheet material. The foregoing list is intended to be illustrative rather than limiting, and other substrates are also comprehended by the present invention.

### Coating Materials

The coating material layer may comprise one or more of many different materials, such as adhesives, inks, rubbers, plastics, release coats, and tie layers. For clarity, the present invention will be described primarily with reference to a layer of pressure sensitive adhesive, although other coating materials, including those specifically enumerated, are intended to be included within the scope of the invention.

Many different types of adhesives may be suitable for application to a substrate to form the article of the present invention. Examples of such adhesives include, but are not limited to, natural rubber adhesives, latex-based adhesives, thermoplastic rubbers, butyl rubber adhesives, acrylic adhesives, urethane adhesives, silicone adhesives, epoxy adhesives, radiation cured adhesives, styrene/isoprene adhesives, styrene/butadiene adhesives, styrene/ethylene-butylene adhesives, and polyolefin adhesives.

### Sample Adhesive

A preferred adhesive is an acrylic pressure sensitive adhesive described in pending U.S. Patent Application Serial No. 07/816,593, filed 31 December 1991 and entitled "Removable, Low Melt Viscosity Acrylic Pressure Sensitive Adhesives," the contents of which is incorporated herein by reference. This adhesive comprises three

components: 1) from about 10% to about 50% by weight of at least one higher alkyl acrylate having an alkyl group from 12 to 26 carbon atoms, 2) from about 50% to about 90% by weight of at least one lower alkyl acrylate having an alkyl group from 4 to 12 atoms, wherein the upper and lower alkyl acrylates cannot simultaneously have alkyl chains of 12 carbon atoms, and 3) sufficient crosslinker to impart enough cohesive strength to the adhesive to prevent substantial adhesive transfer.

The foregoing exemplary pressure sensitive adhesives are monofunctional unsaturated acrylate or methacrylate esters of non-tertiary alkyl alcohols, the alkyl groups of which have from about 4 to about 12 carbon atoms. Examples of the shorter chain, lower alkyl acrylates and methacrylates that may be used in conjunction with the article of the present invention include, but are not limited to, n-butyl acrylate, isobutyl acrylate, 2-ethylhexyl acrylate, isooctyl acrylate, n-octyl acrylate, n-octyl methacrylate, 2-methylbutyl acrylate, isononyl acrylate, isoamyl acrylate, isodecyl acrylate, isodecyl methacrylate, 4-methyl-2-pentyl acrylate and mixtures thereof.

The higher alkyl acrylate or methacrylate monomers useful in preparing the pressure sensitive adhesives described above are monofunctional unsaturated acrylate or methacrylate esters of non-tertiary alkyl alcohols, the alkyl groups of which have from about 12 to about 26 carbon atoms. Examples of the long side chain acrylate and methacrylate esters used in the present invention include, but are not limited to, lauryl acrylate, lauryl methacrylate, isotridecyl acrylate, n-tetradecyl acrylate, n-tetradecyl methacrylate, n-hexadecyl acrylate, n-hexadecyl methacrylate, n-octadecyl acrylate, n-octadecyl methacrylate, eicosanyl acrylate, hexacosanyl acrylate and mixtures thereof. Preferred long side chain alkyl acrylates and methacrylates include lauryl acrylate, lauryl methacrylate, octadecyl acrylate, octadecyl methacrylate, hexacosanyl acrylate, eicosanyl acrylate and isotridecyl acrylate.

The crosslinkers used in the adhesive described above include multifunctional acrylates and methacrylates; triazine-, benzophenone- and acetophenone- derived photocrosslinking compounds and silanes.

## Sample Adhesive

Another preferred adhesive is an acrylic pressure-sensitive adhesive also described in pending U.S. Patent Application Serial No. 07/816,593, described and incorporated by reference above. This adhesive comprises four components: (1) from about 50% to about 90% by weight of a lower alkyl acrylate having an alkyl group which comprises from about 4 to 12 carbon atoms, (2) from about 10% to about 50% by weight of a higher alkyl acrylate having an alkyl group which comprises from about 12 to 26 carbon atoms, (3) up to about 5% by weight of at least one strong polar monomer or alternatively up to about 30% by weight of a moderately polarized monomer and (4) sufficient crosslinker to impart cohesive strength to the adhesive.

The linear or branched lower alkyl acrylate or methacrylate esters useful in preparing this pressure sensitive adhesive are linear or branched monofunctional unsaturated acrylate or methacrylate esters of non-tertiary alkyl alcohols, the alkyl groups of which have from about 4 to about 12 carbon atoms. Examples of the shorter chain, lower alkyl acrylates and methacrylates used in the invention include, but are not limited to, n-butyl acrylate, isobutyl acrylate, 2-ethylhexyl acrylate, isooctyl acrylate, n-octyl acrylate, n-octyl methacrylate, 2-methylbutyl acrylate, isononyl acrylate, isoamyl acrylate, isodecyl acrylate, isodecyl methacrylate, 4-methyl-2-pentyl acrylate, and mixtures thereof.

The higher alkyl acrylate or methacrylate monomers useful in preparing this acrylic pressure sensitive adhesive are monofunctional unsaturated acrylate or methacrylate esters of non-tertiary alkyl alcohols, the alkyl groups of which have from about 12 to about 26 carbon atoms. Examples of the long side chain acrylate and methacrylate esters used in the present invention include, but are not limited to, lauryl acrylate, lauryl methacrylate, isotridecyl acrylate, n-tetradecyl acrylate, n-tetradecyl methacrylate, n-hexadecyl acrylate, n-hexadecyl methacrylate, n-octadecyl acrylate, n-octadecyl methacrylate, eicosanyl acrylate, hexacosanyl acrylate and mixtures thereof.

The polar monomers used in the pressure-sensitive adhesive of the present invention can be either strongly polarized or moderately polarized or both. The polar monomers can be used singularly or in combination with other polar monomers.

Strongly polarized monomers include mono-, di-, and multi-functional carboxylic acids and salts such as acrylic acid, methacrylic acid, itaconic acid, crotonic acid, maleic acid and fumaric acid. Other suitable monomers include cyanoalkyl acrylates, acrylamides and acrylonitriles.

Moderately polarized monomers include, but are not limited to, N-vinyl pyrolidone, vinyl halides, vinylidene chloride, vinyl toluene, styrene, hydroxyalkyl acrylates and/or methacrylates. 2-hydroxy ethyl acrylate and 3-hydroxy propyl methacrylate are examples of suitable moderately polarized monomers.

The crosslinkers used in the exemplary pressure sensitive adhesive composition include, but are not limited to: metal ion crosslinkers such as the chelated esters of ortho-titanic acid, multifunctional acrylates and

methacrylates; triazine-, benzophenone- and acetophenone- derived photocrosslinking compounds, silanes and aziridine amides which have the general formula:

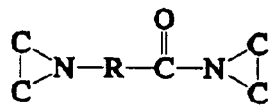

wherein R is an alkyl group.

If desired, fillers can be added to the adhesive. The specific type of filler should be selected so as not to adversely affect the adhesive properties of the adhesive. Fillers that are believed to have utility in this regard include, but are not limited to finely divided fumed silica, zinc oxide, calcium carbonate, aluminum oxide, titanium dioxide, clay, graphite, talc and other metal oxides.

A tie layer may also be applied between the substrate and the adhesive layer. The tie layer is coated onto the substrate to strengthen the adhesion between the adhesive and the backing, and to prevent adhesive transfer from the article to the surface to which the article is applied. The thickness of the tie layer may be varied as desired, and is typically on the order of 0.0005 to 0.0076 mm (0.00002 to 0.0003 in) thick. One illustrative material for the tie layer is maleated propylene/hexene copolymer, available from the Kodak Corporation of Kingsport, Tennessee under the designation P1824-013.

Striations

The article of the invention comprises a multiplicity of striations, or striae, that are aperiodic and irregular. Thus, the striae do not occur at a fixed interval across the surface of the coating material layer, and the depth and width of the striae vary across the surface of the coating material. Depending on factors such as the method of applying the coating material, and the rheological characteristics of the material, striae 18 may appear to be randomly positioned throughout the coating layer 10. It is preferred that the striae be generally parallel, although individual striae may vary in their orientation, as shown in Figures 4 and 5.

The density and size of the striae may vary, depending upon the intended application. For example, many striae may be formed if it is desired to provide an exposed adhesive surface having a comparatively small effective surface area for application to an object surface. Alternatively, few striae may be provided where a comparatively large effective surface area is desired. It should be noted that if a large number of relatively small striae are formed in very close proximity to each other, the surface of the coating layer may begin to resemble a planar surface, which may be undesirable. Thus, striation density may be varied to produce the desired adhesive effect. For purposes of the present invention, the "effective surface area" is the area of the striated adhesive layer available for contact with an opposed surface, and must be less than the actual surface area of the adhesive layer. The effective surface area is measured after the article has been adhered to a surface using a 4 1/2 pound standard roller, as described in the test method below. By changing the size and density of the striae, the effective surface area of the coating layer may be varied to provide different adhesive characteristics.

Preferably, the striations in the adhesive should result in 10% to 60% of the adhesive surface available for bonding with a smooth, planar application surface. More preferably, the striations in the adhesive should result in 20% to 40% of the adhesive surface available for bonding with a planar application surface.

The distance between adjacent striations preferably is from about 0.051 to 5.08 mm (0.002 to 0.200 in), and is more preferably from about 0.508 mm to 2.032 mm (0.020 to 0.080 in). The height of the striations is preferably from 0.0013 to 0.0038 mm (0.00005 to 0.0015 in), and more preferably from 0.0013 to 0.0203 mm (0.00005 to 0.0008 in).

Application of Coating Layer and Striae Formation

A method and apparatus suitable for applying a coating material to a substrate in the manner contemplated by the present invention is disclosed in copending U.S. Patent Application Serial No. 08/056,362, filed 30 April 1993 and entitled "Method and Apparatus for Applying a Coating Material to a Substrate," commonly assigned to the assignee of the present invention, and the contents thereof is expressly incorporated herein by reference.

An exemplary method and apparatus is illustrated in Figures 6 through 10, and includes an applicator apparatus 100 for applying an adhesive 102 to a substrate 104, such as paper. The substrate is provided by supply roll 103, and is collected at collection roll 105. The applicator includes a hub 106 having a generally cylindrical peripheral surface 108 and a central axis about which the hub is adapted to rotate. The hub is rotatively supported at each end by support structure (not shown). Substrate 104 is fed between backing roller 107 and hub 106, and adhesive 102 is applied to the substrate 104 at application interface 111.

Also provided is a source 110 of adhesive 102, and means for rotating the hub about the central axis at a predetermined rotational velocity. In the illustrated embodiment, the rotating means comprises a motor 112. The hub is supported proximate the adhesive source 110, such that adhesive may be disposed on the peripheral surface of the hub at a controlled rate. Also provided is a metering bearing 114, which controls the amount of coating material that is allowed to accumulate on the surface of the application roller. Metering bearing 114 also seals coating material reservoir 116, to prevent coating material from leaking out of the reservoir.

The peripheral surface 108 of hub 106 includes a plurality of spaced, discrete structures projecting from the peripheral surface of the hub, between and on which structures the adhesive is carried. That is, the adhesive coats the entire peripheral surface of the application member, including the projecting structures. The projecting structures are generally hemispherical, and measure on the order of 0.76 mm (0.003 in) high, relative to the remainder of the peripheral surface. Projecting structures 115 may be regularly spaced or irregularly spaced about the peripheral surface, and may be hemispherical, square, triangular, or any other suitable shape.

An exploded sectional view of a portion of the application roller 106, peripheral surface 108, and projecting structures 115 is shown in Figure 7. Adhesive 102 is carried both between projecting structures 115 and atop projecting structures 115. Metering bearing 114 controls the thickness of the layer of adhesive coated over and between the projecting structures.

At the application interface 111, adhesive 102 is transferred to substrate 104 as shown in Figure 8. Application roller 106 is rotating with a surface velocity $V_1$ (the velocity of the surface at the application interface), and substrate 104 is travelling with a velocity $V_2$ that is approximately equal to $V_1$. Adhesive 102 is transferred to substrate 104 at the application interface 111, because the adhesive has a greater affinity for substrate 104 than for the peripheral surface 108 of application roller 106. Projecting structures 115 prevent adhesive from being transferred to substrate 104 at imprints 120.

Figure 9 illustrates the operation of the application roller when the surface velocity of the application roller $V_1$ is less than the velocity of the substrate $V_2$. Adhesive 102 is applied to substrate 104 as described previously, but because projecting structures 115 are travelling more slowly than substrate 104, the projecting structures tend to wipe away, or "sweep out" adhesive at imprints 120'. The degree to which the projecting structures sweep out adhesive depends on the difference in velocity between the roller and the substrate at the interface, which may be desirable for providing a repositionable substrate.

Another manner of operating the applicator of the present invention is illustrated in Figure 10, wherein the surface velocity of the application roller $V_1$ is greater than the velocity of the substrate $V_2$. Adhesive 102 is applied to substrate 104 as described previously, but because projecting structures 115 are travelling faster than substrate 104, the adhesive tends to build up, or be "loaded" onto the substrate. Adhesive loading may be beneficial because a thicker layer of adhesive may be applied to the substrate merely by changing the operating speed of the applicator roller. Furthermore, adhesive surface 122" is virtually devoid of imprints, and thus the effective surface area of the adhesive approaches the actual surface area.

## Examples

The following Examples are provided to better describe the article of the present invention, and thus are intended to be illustrative rather than limiting. The test methods used to describe the data in each example are summarized below. All percentages, parts and ratios in the Examples and Comparative Examples are by weight, unless specifically stated otherwise. In those instances where the weight percentages do not total 100%, the error is due to rounding. The Comparative Examples represent those instances in which the removability performance of a particular adhesive composition was graded differently than the examples that exhibited "good" removability, as described below.

### Test Method: Peel Adhesion

Peel adhesion, for purposes of the present invention, is defined as the force required to remove a coated flexible sheet material from a test panel measured at a specific angle and rate of removal. In the examples, this force is expressed in Newtons per decimeter (N/dm) width of coated sheet.

A strip of a coated sheet measuring 2.54 cm (1 in) wide was adhered to a horizontal test plate, with at least 12.7 lineal cm (5.0 in) in firm contact with the test plate. A strip of flexible sheet material 3.175 cm (1.25 in) wide was applied to the coated sheet by a 2 kg. hard rubber roller. The free end of the flexible sheet material is attached to the adhesion tester load cell, which was adapted to peel the strip from the coated sheet. The flexible sheet material was peeled from the coated sheet at a constant speed of 30.5 cm per minute (12.0 in/min)

at a removal angle of 90 degrees. The removal angle is the angle between the coated sheet and the flexible sheet material. The load cell reading was recorded as the flexible sheet material was peeled from the surface of the coated sheet. The data is reported as the average of the range of numbers observed during the test.

Test Method: Striation Width Measurement

The distance from one striation to an adjacent striation was measured using photomicroscopy. A 2.54 cm x 12.7 cm (1 in by 5 in) coated sheet was attached to a horizontal test plate and placed under a photomicroscope capable of magnifying the image by at least 50 times. After the camera was adjusted to properly focus the image, a photographic image of the coated sheet at 50 power magnification was produced. A stage micrometer was also placed under a photomicroscope at the same magnification as the coated sheet, and a photographic image of the stage micrometer was produced for comparison as an accurate distance calibration. Using this true distance calibration, the distances in the coated sheet magnified photographic image were measured. Striation density was calculated from numerous measurements of striations in a given distance. Striation height was determined from cross-sectional views of the coated sheet in the same manner.

Test Method: Removability

Adhesives of the present invention are considered removable if they are removed cleanly from a test substrate without causing any damage to the test substrate, over a range of peel rates and varied periods of dwell at room temperature or at elevated temperatures.

A strip of the coated sheet material 0.254 dm (1 in) in width was applied to the horizontal surface of a test paper. At least 0.762 lineal dm (3.0 in) of the strip was in firm contact with the test paper. The strip was manually applied by applying pressure to the strip with a 2 kg hard rubber roller. The roller traversed the strip two times (once across the strip, and once back to the starting point). After a specified dwell period, the coated sheet material was then peeled from the horizontal test paper at a constant rate of 30.5 cm per minute (12.0 in/min) and a removal angle of 90 degrees, as described above.

The removability and peel force were judged according to the following ratings:

good: Samples that were removed from the test substrate without damaging or leaving residue on the test substrate, while exhibiting peel force high enough to ensure secure attachment, were judged as "good."

aggressive: Samples that were removed from the test substrate without damaging or leaving residue on the test substrate, but which could only be removed from the test substrate at a slow peel rate without damaging the paper backing, were judged as "aggressive."

raspy: Samples that were removed from the test substrate without damaging or leaving residue on the test substrate, but which were too stiff to be removed smoothly, were judged as "raspy."

tear: Samples that display a peel adhesion strength to the test substrate and/or paper backing high enough to tear or delaminate at any peel rate were indicated as "tear."

ghost: Samples that left a very thin, non-tacky adhesive residue on the test substrate when removed were described as "ghost."

weak: Samples that had low tack and low peel strength were judged as "weak."

cohesive failure: Samples that left adhesive residue on both the paper backing and test substrate were judged as exhibiting "cohesive failure."

Test Method: Striation Density

Striation density was measured using image analysis of the wetted surface area of the adhesive to glass. A sample was adhered to a clean glass slide measuring 2.54 cm by 7.62 cm (1 in by 3 in) using a 2 kg (4.5 lb) rubber roller passed once each in the forward and reverse directions at a speed of 2.54 cm/s (1 in/s). The sample and the slide were placed on a microscope stage with the adhesive facing up. The image was transmitted by video camera to the image analyzer under 30 power magnification. The area viewed by image analyzer was 2.4 $mm^2$ (0.0037 $in^2$). Results were reported in the percent of area wetted by the adhesive. Ten readings per sample were averaged to obtain the values listed below.

Examples 1 Through 30 and Comparative Examples C1 and C2

Eighty-four grams of isooctyl acrylate (IOA), 75 grams of octodecyl acrylate (ODA) (@ 48% solids in ethyl acetate), 121 grams of ethyl acetate, and 0.92 grams of 4-acryloyl-oxy-benzophenone (ABP) (@ 26% solids in ethyl acetate) were charged in a 500 ml, four-necked reaction vessel. The reaction vessel was equipped

with a stirrer, a thermometer, a condenser, an addition funnel, and a thermowatch. An solution of 0.36 grams catalyst of the type available from the E.I. DuPont de Nemours Corporation of Bloomington, Delaware under the designation "VAZO 64," in 20 grams of ethyl acetate was added to the addition funnel. Both the solution in the reaction vessel and the materials in the addition funnel were then purged with nitrogen. The solution in the reaction vessel was then stirred and heated to 55° C and initiator was added. After about 20 hours, a 98-99% conversion was obtained. After drying, the adhesive was suitable for application to a backing.

The adhesive was applied to a paper substrate of 20 pound xerographic bond paper using the method and apparatus described above under the heading "Application of Coating Layer and Striae Formation." An adhesive coating thickness of 0.00127 mm to 0.00381 mm (0.00005 in to 0.0015 in) was applied to the paper substrate in a stripe measuring 3.175 cm (1.25 in) wide. In the tests indicated by the designation "TL", a tie layer of polyolephin, available from the Kodak Chemical Company of Kingsport, Tennessee under product number P-1824-013, was applied between the adhesive and the substrate with a thickness of approximately 0.0025 mm (0.0001 in).

The adhesive coating was crosslinked by UV radiation from a Fusion brand F-600 UV light source equipped with a 600 watt, 2.5 cm mercury halide bulb. The paper substrate was passed beneath the UV radiation station at a velocity of approximately 1.52 m/s (5.0 ft/s) to crosslink the adhesive to prepare the sample for use.

The coated paper was then adhered, as specified in the removability and the peel adhesion tests previously described, to 20 pound xerographic bond paper and OR-16 polyester film, respectively. Peel adhesion was then tested, whereas removability was measured after dwell of one day at room temperature, and then for two weeks at 120° F. The test results are summarized in Tables 1 and 2.

Table One: Peel Adhesion

| Example Number | Weight Based Ratio of Constituents (IOA/ODA/ABP) | Striation Density (% of Surface Area) | Peel Adhesion N/dm (g/cm) |
|---|---|---|---|
| 1 | 60/40/0.2 | 27 | 0.897 (9.1) |
| 2 | 60/40/0.2 | 42 | 2.071 (21.1) |
| 3 | 60/40/0.2 | 57 | 2.999 (30.6) |
| 4 | 60/40/0.4 | 12 | 0.556 (5.7) |
| 5 | 60/40/0.4 | 27 | 1.144 (11.7) |
| 6 | 60/40/0.4 | 41 | 1.855 (18.9) |
| 7 | 70/30/0.2 | 17 | 0.927 (9.4) |
| 8 | 70/30/0.2 | 27 | 1.979 (20.2) |
| 9 | 70/30/0.2 | 52 | 3.030 (30.9) |
| 10 | 70/30/0.4 | 24 | 2.195 (22.4) |
| 11 | 70/30/0.4 | 41 | 2.875 (29.3) |
| 12 (TL) | 80/20/0.4 | 26 | 1.020 (10.4) |
| 13 | 80/20/0.4 | 32 | 1.762 (18.0) |
| 14 (TL) | 80/20/0.4 | 43 | 2.906 (29.6) |
| 15 | 90/10/0.4 | 22 | 1.051 (10.7) |
| 16 | 90/10/0.4 | 59 | 3.803 (38.7) |

Table 2: Removability

| Example Number | Weight Based Ratio of Constituents (IOA/ODA/ABP) | Striation Density (% of Surface Area) | Removability |
|---|---|---|---|
| 17 | 60/40/0.2 | 27 | good |
| 18 | 60/40/0.2 | 42 | good |
| 19 | 60/40/0.2 | 57 | good |
| 20 | 60/40/0.4 | 12 | good |
| 21 | 60/40/0.4 | 27 | good |
| 22 | 60/40/0.4 | 41 | good |
| 23 | 70/30/0.2 | 17 | good |
| 24 | 70/30/0.2 | 27 | good |
| 25 | 70/30/0.2 | 52 | good |
| 26 | 70/30/0.4 | 24 | good |
| 27 | 70/30/0.4 | 41 | good |
| 28 | 80/20/0.4 | 26 | good |
| 29 | 80/20/0.4 | 32 | good |
| 30 | 80/20/0.4 | 43 | good |
| C1 | 90/10/0.4 | 22 | raspy |
| C2 | 90/10/0.4 | 59 | aggressive |

Examples 32 Through 70 and Comparative

Examples C3, C4, and C5

Sixty-eight grams of isooctyl acrylate (IOA), 62 grams of octodecyl acrylate (ODA) (@ 48% solids in ethyl acetate), 2 grams of acrylic acid (AA), 107.5 grams of ethyl acetate, and 0.2 grams of 4-acryloyl-oxybenzophenone (ABP) (@ 30% solids in ethyl acetate) were charged in a 500 ml, four-necked reaction vessel. The reaction vessel was equipped with a stirrer, a thermometer, a condenser, an addition funnel, and a thermowatch. A solution of 0.3 grams of catalyst of the type available from the E.I. DuPont de Nemours Corporation of Bloomington, Delaware, under the designation "VAZO 64" in 10 grams of ethyl acetate was added to the addition funnel. Both the solution in the reaction vessel and the materials in the addition funnel were then purged with nitrogen. The solution in the reaction vessel was then stirred and heated to 55° C and initiator was added. After about 20 hours, a 98-99% conversion was obtained. After drying, the adhesive was suitable for application to a backing.

The adhesive was applied to a paper substrate of 20 pound xerographic bond paper using the method and apparatus described above under the heading "Application of Coating Layer and Striae Formation." An adhesive coating thickness of 0.00127 mm to 0.00381 mm (0.00005 in to 0.0015 in) was applied to the paper substrate in a stripe measuring 3.175 cm (1.25 in) wide. In the tests indicated by the designation "TL", a tie layer of polyolephin, available from the Kodak Chemical Company of Kingsport, Tennessee under product number P-1824-013, was applied between the adhesive and the substrate with a thickness of approximately 0.0025 mm (0.0001 in).

The adhesive coating was crosslinked by UV radiation from a Fusion brand F-600 UV light source equipped with a 600 watt, 2.5 cm mercury halide bulb. The paper substrate was passed beneath the UV radiation station at a velocity of approximately 1.52 m/s (5.0 ft/s) to crosslink the adhesive to prepare the sample for use.

The coated paper was then adhered, as specified in the removability and the peel adhesion tests previously described, to 20 pound xerographic bond paper and OR-16 polyester film, respectively. Peel adhesion was then tested, whereas removability was then measured after dwell of one day at room temperature, and then for two weeks at 120° F. The test results are summarized in Tables 3 and 4.

Table 3: Peel Adhesion

| Example Number | Weight Based Ratio of Constituents (IOA/ODA/AA/ABP) | Striation Density (% of Surface Area) | Peel Adhesion N/dm (g/cm) |
|---|---|---|---|
| 32 (TL) | 59/40/1/0.4 | 33 | 1.731 (17.6) |
| 33 (TL) | 59/40/1/0.4 | 22 | 1.051 (10.7) |
| 34 (TL) | 58/39/3/0.4 | 48 | 2.844 (29.0) |
| 35 (TL) | 58/39/3/0.4 | 18 | 1.082 (11.0) |
| 36 (TL) | 58/40/2/0.4 | 14 | 1.051 (10.7) |
| 37 (TL) | 58/40/2/0.4 | 39 | 2.010 (20.5) |
| 38 (TL) | 58/40/2/0.4 | 57 | 3.586 (36.5) |
| 39 | 57/39/4/0.4 | 14 | 0.773 (7.9) |
| 40 | 57/39/4/0.4 | 29 | 1.731 (17.6) |
| 41 | 57/39/4/0.4 | 50 | 4.297 (43.8) |
| 42 (TL) | 67/29/4/0.4 | 16 | 1.113 (11.3) |
| 43 (TL) | 67/29/4/0.4 | 39 | 1.608 (16.4) |
| 44 (TL) | 67/29/4/0.4 | 44 | 3.432 (35.0) |
| 45 (TL) | 68/29/3/0.4 | 39 | 3.308 (33.7) |
| 46 (TL) | 69/30/1/0.4 | 19 | 1.422 (14.5) |
| 47 (TL) | 69/30/1/0.4 | 37 | 2.600 (26.5) |
| 48 (TL) | 68/30/2/0.4 | 32 | 1.824 (18.6) |
| 49 (TL) | 68/30/2/0.4 | 53 | 2.844 (29.0) |
| 50 (TL) | 78/20/2/0.4 | 24 | 1.422 (14.5) |
| 51 (TL) | 78/20/2/0.4 | 33 | 1.948 (19.8) |
| 52 (TL) | 78/20/2/0.4 | 58 | 3.122 (31.8) |

Table 4: Removability

| Example Number | Weight Based Ratio of Constituents (IOA/ODA/AA/ABP) | Striation Density (% of Surface) | Removability |
|---|---|---|---|
| 53 | 59/40/1/0.4 | 33 | good |
| 54 | 59/40/1/0.4 | 22 | good |
| 55 | 58/39/3/0.4 | 48 | good |
| 56 | 58/39/3/0.4 | 18 | good |
| 57 | 58/40/2/0.4 | 14 | good |
| 58 | 58/40/2/0.4 | 39 | good |
| 59 | 58/40/2/0.4 | 57 | good |
| 60 | 57/39/4/0.4 | 14 | good |
| 61 | 57/39/4/0.4 | 29 | good |
| 62 | 57/39/4/0.4 | 50 | good |
| 63 | 67/29/4/0.4 | 16 | good |
| 64 | 67/29/4/0.4 | 39 | good |
| 65 | 67/29/4/0.4 | 44 | good |
| 66 | 68/29/3/0.4 | 39 | good |
| 67 | 69/30/1/0.4 | 19 | good |
| 68 | 69/30/1/0.4 | 37 | good |
| 69 | 68/30/2/0.4 | 32 | good |
| 70 | 68/30/2/0.4 | 53 | good |
| C3 | 78/20/2/0.4 | 24 | raspy |
| C4 | 78/20/2/0.4 | 33 | raspy |
| C5 | 78/20/2/0.4 | 58 | aggressive |

Examples 71 Through 94;

Comparative Examples C6 Through C17

Various commercially available hot melt adhesive were evaluated for use with a paper substrate as a repositionable paper note. The following adhesives designated "Nat'l Starch" are available from the National Starch Company of Bridgewater, New Jersey, under the product number shown. The adhesives designated "Century" are available from the Century Adhesives Corporation of Columbus, Ohio, under the product number shown. The adhesives designated "Kodak" are available from the Kodak Chemical Company of Kingsport, Tennessee, under the product number shown.

The respective adhesives was applied to a paper substrate of 20 pound xerographic bond paper using the method and apparatus described above under the heading "Application of Coating Layer and Striae Formation." An adhesive coating thickness of 0.00127 mm to 0.00381 mm (0.00005 in to 0.0015 in) was applied to the paper substrate in a stripe measuring 3.175 cm (1.25 in) wide. The coated paper was then adhered, as specified in the removability and the peel adhesion tests previously described, to 20 pound xerographic bond paper and OR-16 polyester film, respectively. Peel adhesion was then tested, whereas removability was measured after dwell of one day at room temperature, and then for two weeks at 120° F. The test results are summarized in Tables 5 and 6.

Table 5: Peel Adhesion

| Example Number | Commercial Adhesives | Striation Density (% of Surface Area) | Peel Adhesion N/dm (g/cm) |
|---|---|---|---|
| 71 | Nat'l Starch 70-9635 | 5 | 1.237 (12.6) |

| | | | |
|---|---|---|---|
| 72 | Nat'l Starch 70-9635 | 8 | 2.133 (21.7) |
| 73 | Nat'l Starch 70-9635 | 12 | 3.463 (35.3) |
| 74 | Nat'l Starch 70-9604 | 5 | 0.587 (6.0) |
| 75 | Nat'l Starch 70-9604 | 7 | 1.206 (12.3) |
| 76 | Century CA-503A | 16 | 0.402 (4.1) |
| 77 | Century CA-503A | 20 | 1.360 (13.9) |
| 78 | Century CA-501 | 10 | 1.113 (11.3) |
| 79 | Century CA-501 | 26 | 1.855 (18.9) |
| 80 | Century CA-501 | 36 | 2.782 (28.3) |
| 81 | Malcolm Nicol 1-2078 | 8 | 0.835 (8.5) |
| 82 | Malcolm Nicol 1-2078 | 29 | 2.010 (20.5) |
| 83 | Malcolm Nicol P-1577 | 8 | 0.711 (7.2) |
| 84 | Malcolm Nicol P-1577 | 11 | 1.793 (18.3) |
| 85 | Kodak PM 2695 Propylene/Hexene copolymer 70/30 | 8 | 1.268 (12.9) |
| 86 | Kodak PolyHexene TX-1872-135 | 4 | 0.371 (3.8) |
| 87 | Kodak PolyHexene TX-1872-135 | 20 | 3.957 (40.3) |

| | | | |
|---|---|---|---|
| 88 | Kodak Hexene/ Propylene/Ethylene TX-1771-130 54/39/7 | 11 | 1.360 (13.9) |

Table 6: Removability

| Example Number | Commercial Adhesive | Striation Density (% of Surface Area) | Removability |
|---|---|---|---|
| C6 | Nat'l Starch 70-9635 | 5 | weak |
| 89 | Nat'l Starch 70-9635 | 8 | good |
| 90 | Nat'l Starch 70-9635 | 12 | good |
| C7 | Nat'l Starch 70-9604 | 5 | weak |
| C8 | Nat'l Starch 70-9604 | 7 | weak |
| C9 | Century CA-503A | 16 | weak |
| C10 | Century CA-503A | 20 | weak |
| C11 | Century CA-501 | 10 | weak |
| 91 | Century CA-501 | 26 | good |
| 92 | Century CA-501 | 36 | good |
| C12 | Malcolm Nicol 1-2078 | 8 | weak |
| C13 | Malcolm Nicol 1-2078 | 29 | ghost |
| C14 | Malcolm Nicol P-1577 | 8 | weak |

| | | | |
|---|---|---|---|
| 93 | Malcolm Nicol P-1577 | 11 | good |
| C15 | Kodak PM 2695 Propylene/Hexene copolymer 70/30 | 8 | tear |
| C16 | Kodak PolyHexene TX-1872-135 | 4 | tear |
| C17 | Kodak PolyHexene TX-1872-135 | 20 | tear |
| C18 | Kodak Hexene/ Propylene/Ethylene 54/39/7 TX-1771-130 | 11 | cohesive failure |

Applications of the Invention

The present invention is believed to have broad applicability to the application of a pressure sensitive adhesive layer not only to small and large sheets of paper, but also to such things as easel pads and rolls, book marks, photo album pages, greeting card inserts, foam mounting tapes, double coated tapes, decals, protective films, reclosable envelope flaps, and repositionable wall decorations.

As shown in Figure 11, a plurality of papers each having a stripe of pressure sensitive adhesive according to the present invention may be assembled into a pad 200. The layer of adhesive 210 is bonded to the paper 214 by a tie layer 211 that is interposed between the paper and the adhesive. Each paper is adhesively bonded to the next adjacent paper, and may be peeled from the pad for use. Alternately, the papers may be Z-folded as shown in Figure 12. Tie layer 211' bonds adhesive layer 210' to each respective paper 214'. The adhesive stripes on the respective papers alternate sides, such that a first paper is bonded along one edge to a second, underlying paper, which is in turn bonded at its opposite edge to a third paper underlying the second paper, and so on.

The present invention has been described with reference to several embodiments thereof. However, persons of skill in the art will recognize that variations may be made in the embodiments described without departing from the scope of the invention. Thus, the scope of the present invention should not be limited by the embodiments shown and described herein, but rather by the structures described by the claims, and the equivalents of those structures.

**Claims**

1. An article comprising:
   a substrate (14) having a major surface (12), and
   a layer (10) of coating material adjacent at least a portion of said major surface, said coating layer having an upper surface (16) including a plurality of aperiodic, irregular striae (18) formed therein to provide a reduced effective surface area of the coating layer.

2. The article of claim 1, wherein said substrate is selected from the group consisting of paper, plastic film, cellulose acetate, ethyl cellulose, woven and non-woven fabric formed of synthetic or natural materials, metal, metallized polymeric film and ceramic sheet material.

3. The article of claim 1, wherein said coating material is a pressure sensitive adhesive selected from the

group consisting of natural rubber adhesives, latex-based adhesives, thermoplastic rubbers, butyl rubber adhesives, acrylic adhesives, urethane adhesives, silicone adhesives, epoxy adhesives, styrene/isoprene adhesives, styrene/butadiene adhesives, radiation cured adhesives, polyolefin adhesives, and styrene/ethylene-butylene adhesives.

**4.** The article of claim 1, wherein said coating material is a pressure sensitive adhesive selected from the group consisting of isooctyl acrylate/octadecyl acrylate/4-acryloyl-oxy-benzophenones and isooctyl acrylate/octadecyl acrylate/acrylic acid/4-acryloyl-oxy-benzophenones.

**5.** The article of claim 1, wherein said article further includes a tie layer interposed between said substrate and said coating layer, the tie layer comprising maleated amorphous propylene/hexene copolymer.

**6.** An article comprising:
a paper substrate (14) having a major surface (12), and
a layer (10) of pressure sensitive adhesive adjacent at least a portion of said major surface, said adhesive layer having an upper surface (16) including a plurality of aperiodic, irregular striae (18) formed therein to provide a reduced effective surface area of the adhesive layer, to facilitate adhesive engagement with an opposed surface.

**7.** The article of claim 6, wherein said pressure sensitive adhesive is selected from the group comprising natural rubber adhesives, latex-based adhesives, thermoplastic rubbers, butyl rubber adhesives, acrylic adhesives, urethane adhesives, silicone adhesives, epoxy adhesives, polyolefin adhesives, styrene/isoprene adhesives, styrene/butadiene adhesives, styrene/ethylene-butylene adhesives, and radiation cured adhesives.

**8.** The article of claim 6, wherein said pressure sensitive adhesive is selected from the group consisting of isooctyl acrylate/octadecyl acrylate/4-acryloyl-oxy-benzophenones and isooctyl acrylate/octadecyl acrylate/acrylic acid/4-acryloyl-oxy-benzophenones.

**9.** The article of claim 6, wherein said article further includes a tie layer interposed between said substrate and said coating layer, the tie layer comprising maleated amorphous propylene/hexene copolymer.

**10.** A pad (200, 200') of adhesively repositionable papers (214, 214'), the pad comprising a plurality of papers each having a major surface, and a layer (210, 210') of pressure sensitive adhesive adjacent at least a portion of said major surface, said adhesive layer having an upper surface including a plurality of aperiodic, irregular striae formed therein to provide a reduced effective surface area of the adhesive layer, to facilitate adhesive engagement with an opposed surface.

**11.** The article of claim 10, wherein said pressure sensitive adhesive is selected from the group comprising natural rubber adhesives, latex-based adhesives, thermoplastic rubbers, butyl rubber adhesives, acrylic adhesives, urethane adhesives, silicone adhesives, epoxy adhesives, styrene/isoprene adhesives, styrene/butadiene adhesives, radiation cured adhesives, polyolefin adhesives, and styrene/ethylene-butylene adhesives.

**12.** The article of claim 10, wherein said layer of pressure sensitive adhesive is provided only adjacent one edge of said substrate, with the remainder of said substrate being substantially free from said adhesive.

**13.** The article of claim 10, wherein said pressure sensitive adhesive is selected from the group consisting of isooctyl acrylate/octadecyl acrylate/4-acryloyl-oxy-benzophenones and isooctyl acrylate/octadecyl acrylate/acrylic acid/4-acryloyl-oxy-benzophenones.

**14.** The article of claim 10, wherein said article further includes a tie layer (211, 211') interposed between said substrate and said coating layer, the tie layer comprising maleated amorphous propylene/hexene copolymer.

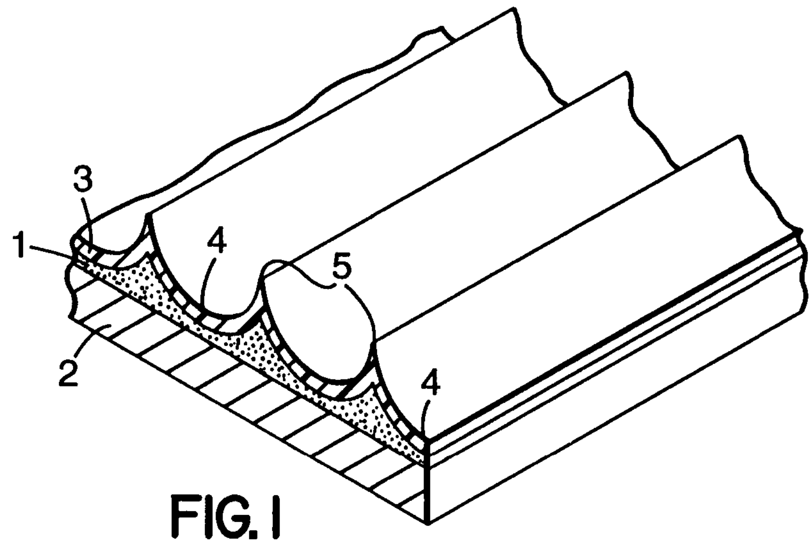


FIG. 1

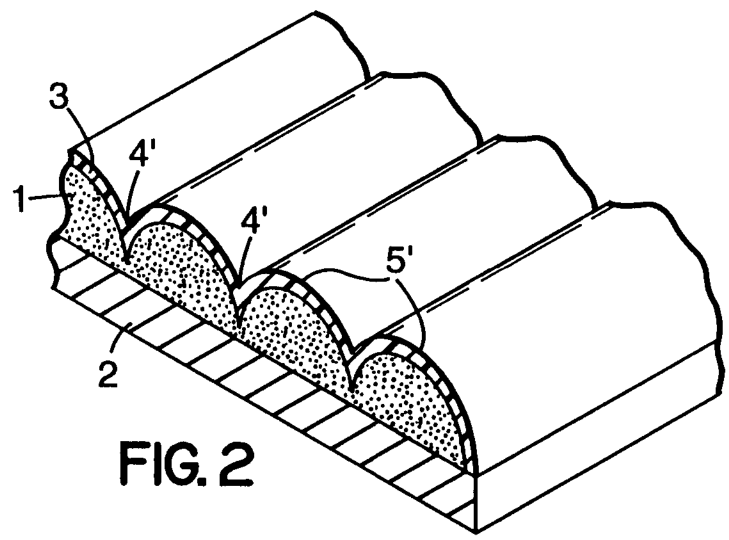


FIG. 2

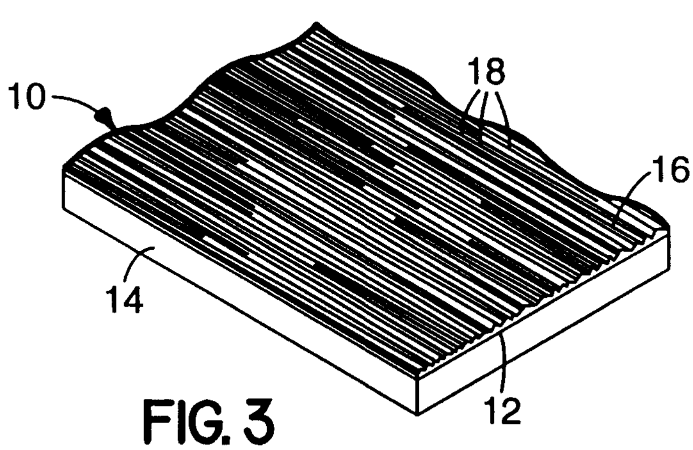


FIG. 3

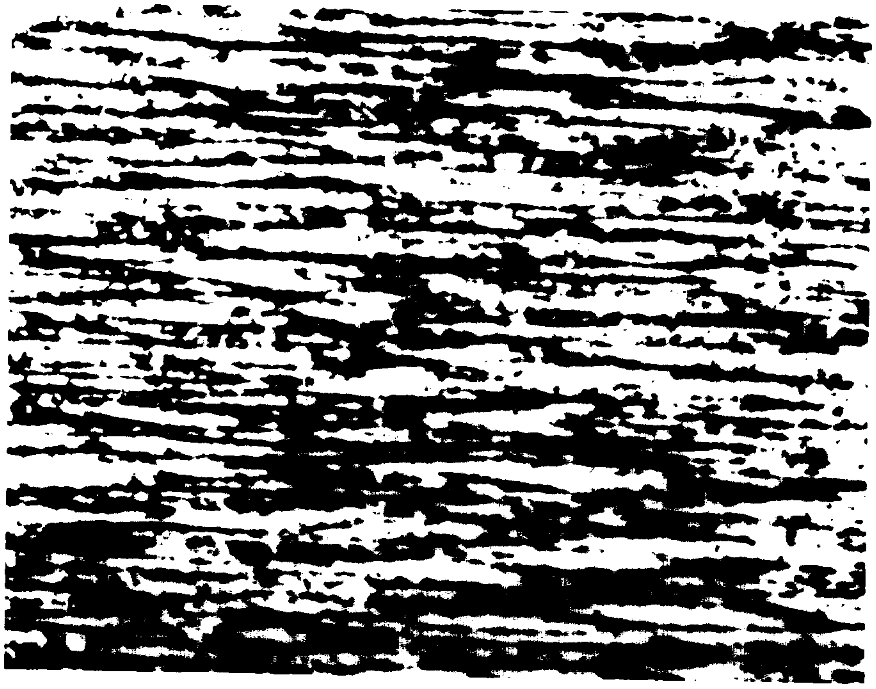

FIG. 4

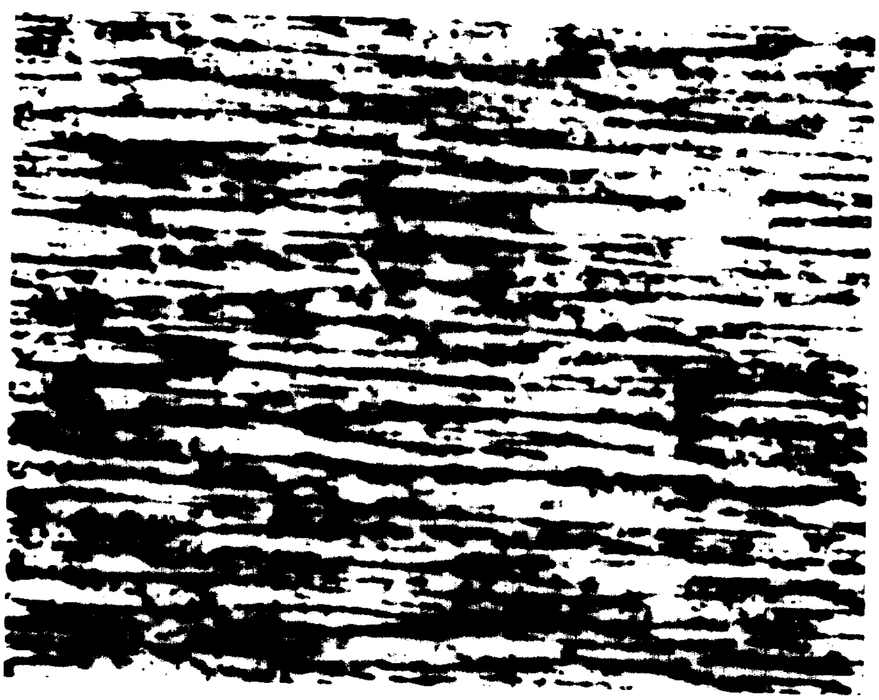

FIG. 5

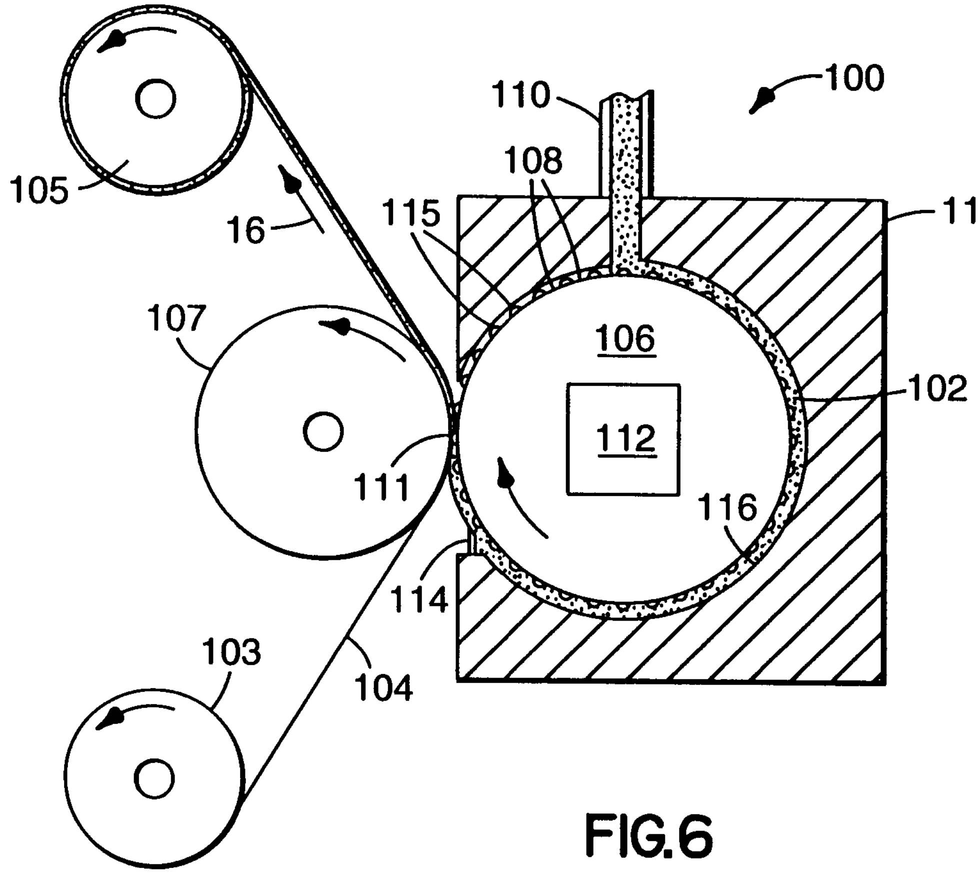
100
110
108
115
117
105
16
107
106
112
102
111
116
114
103
104

FIG.6

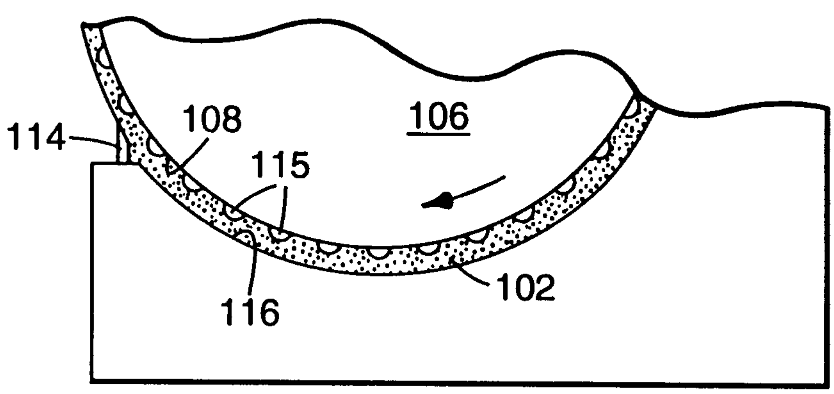
114
108
106
115
116
102

FIG.7

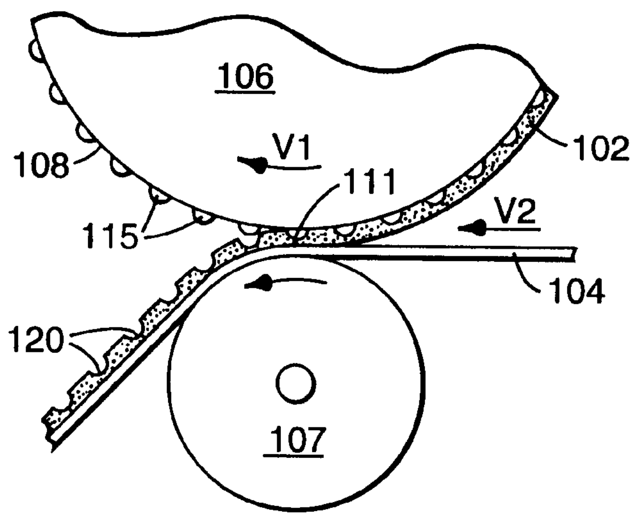


FIG.8

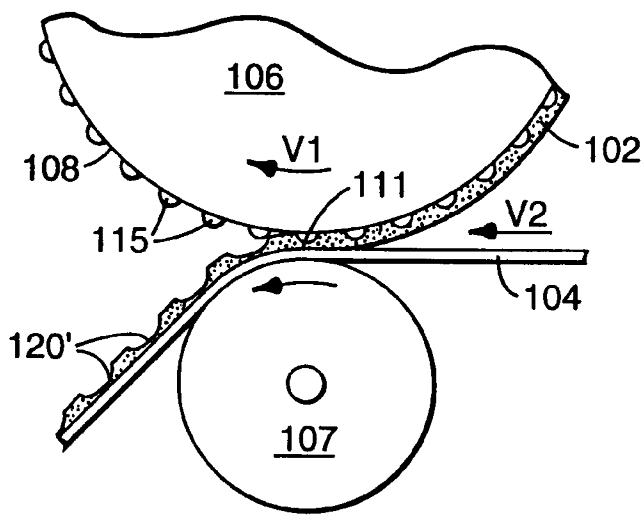


FIG.9

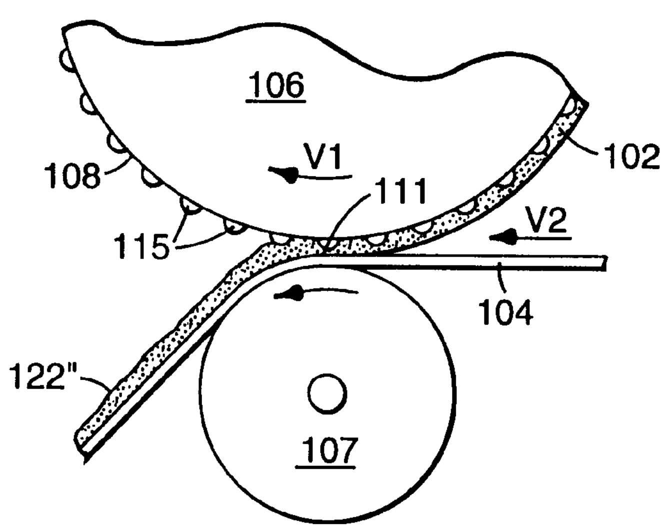


FIG.10

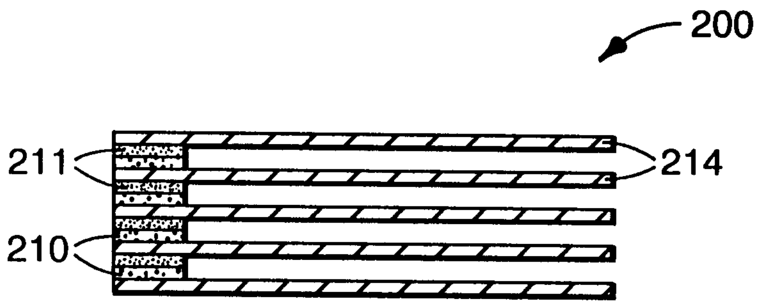


FIG. 11

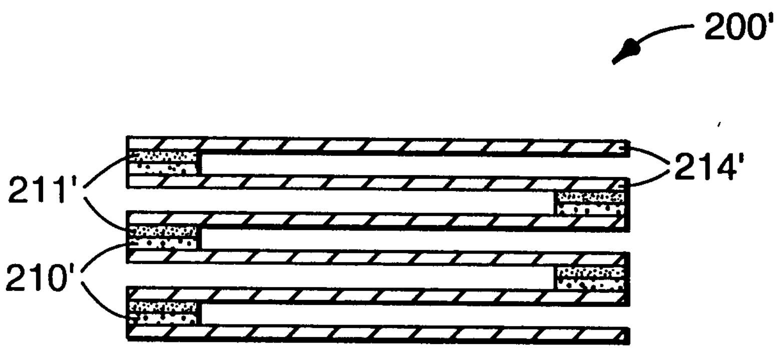


FIG. 12

European Patent Office

# EUROPEAN SEARCH REPORT

Application Number
EP 94 40 0930

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| D,Y | EP-A-0 279 579 (BRIDGESTONE) * claims; figures * | 1 | C09J7/02 C09J7/04 |
| Y | DE-A-34 17 746 (JACKSTADT) * claims; figures * | 1 | |
| Y | WO-A-85 04602 (AVERY INT.) * claims; figures * | 1 | |
| Y | EP-A-0 149 135 (BEIERSDORF) * claims * | 1 | |
| Y | EP-A-0 328 925 (BEIERSDORF) * claims * | 1 | |

TECHNICAL FIELDS SEARCHED (Int.Cl.5)
C09J

The present search report has been drawn up for all claims

| Place of search | Date of completion of the search | Examiner |
|---|---|---|
| THE HAGUE | 4 August 1994 | Leroy, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)